Europäisches Patentamt

European Patent Office

Office européen des brevets

(11) Publication number: **0 059 542**
**B1**

## (12) EUROPEAN PATENT SPECIFICATION

(45) Date of publication of patent specification: **28.08.85**

(21) Application number: **82300665.5**

(22) Date of filing: **10.02.82**

(51) Int. Cl.⁴: **F 27 B 1/00,** F 27 B 1/22, F 23 G 5/00

(54) Combustion apparatus.

(30) Priority: **25.02.81 GB 8106001**

(43) Date of publication of application:
**08.09.82 Bulletin 82/36**

(45) Publication of the grant of the patent:
**28.08.85 Bulletin 85/35**

(84) Designated Contracting States:
**BE DE FR GB**

(56) References cited:
CH-A- 610 647
DE-A-2 221 459
DE-A-2 414 496
FR-A- 764 086
FR-A-1 092 181
FR-A-2 074 985
FR-A-2 233 581
GB-A-1 081 006

(73) Proprietor: **CATAGAS LIMITED**
**117 Kingston Road**
**Leatherhead Surrey KT22 7SU (GB)**

(72) Inventor: **Middlemas, James William**
**10 Highlands Avenue**
**Leatherhead Surrey (GB)**
Inventor: **Jope, Edward Charles**
**Via Del Ronco 4**
**Trieste (IT)**

(74) Representative: **Baverstock, Michael George**
**Douglas et al**
**BOULT, WADE & TENNANT 27 Furnival Street**
**London, EC4A 1PQ (GB)**

## Description

This invention relates to combustion apparatus and in particular to kilns for calcining materials, particularly minerals. The invention also relates to processes of calcination using such kilns. The process may be used for the whole range of calcinable materials, such as limestone, dolomite, magnesite, or gypsum, and such materials are referred to generically herein as "stone".

The kiln may also be used for the destruction of waste materials, particularly noxious industrial waste, either simultaneously with stone calcination, in which case the waste may serve in whole or part as fuel for the calcination process, or without simultaneous stone calcination, in which case the kiln functions in effect as an incinerator for the waste, either with or without the use of additional fuels.

A very large number of types of kiln are in use throughout the world; most being designed to use natural gas or gasified liquid hydrocarbons as fuel. As hydrocarbon fuels are becoming increasingly difficult to obtain with continuity of supply, there is a growing need for multi-purpose kilns capable of burning solid fuels such as coke, and particularly coal, in an efficient manner to yield a good quality product, and which give rise to the minimum production of smoke.

A further problem arises in the calcination of minerals in that the calcined mineral product is very sensitive to the presence of traces of pollutants such as sulphur dioxide, particularly from solid fuels e.g. coal, in the process gases into which they come into contact.

In British Patent Specification No 1301502, a shaft furnace is disclosed which is designed for the integrated calcining and sintering of a mineral. Here a special design is used in order to attain efficient sintering at near maximum temperatures by means of extensive heat recovery and the utilisation of sintering zone exhaust gases in the calcination stage. The disclosed furnace would be difficult to adapt to the use of a solid fuel in the calcination stage, and further the recycling of the sintering zone exhaust gases is detrimental to the quality of the calcined product.

Another kiln is disclosed in British Patent Specification No 1081006 in which undesirable direct recycling of exhaust gases is used, and wherein adaption to solid fuel firing is difficult.

This invention provides combustion apparatus suitable for solid fuel firing, including a vertical shaft, an inlet at the upper part of the shaft for a charge of solid material, an outlet at the bottom of the shaft for burned material, and means for removing gaseous combustion products from the shaft, the apparatus including means for drawing combustion air downwardly through the charge, means for drawing cooling air through the burned material in the lower part of the shaft to cool the burned material and thereby to heat the cooling air, and means for introducing the heated cooling air substantially free from gaseous combustion products into the upper part of the shaft to serve as combustion air for the combustion process, provided that no pre-heating of the charge by the gaseous combustion products can occur, wherein means are provided to prevent mixing of the cooling air and the gaseous combustion products.

The term "burned material" as used above should be construed as including calcined material as well as the residue of burned fuel.

In accordance with the invention, the heated cooling air is further heated by heat exchange with the gaseous products of the combustion/-calcination reaction, before being introduced into the upper part of the shaft as combustion air. The shaft preferably has two gas outlets in its lower part. The upper of the two draws combustion/calcination reaction products downwardly through the shaft, and thereby draws combustion air downwardly through the charge. The combustion/calcination reaction products may then be passed by means of a fan to a heat exchanger where they are cooled and then vented to the atmosphere. The lower of the two outlets is used to draw air upwardly through the burnt material (e.g. calcined stone) in the bottom part of the shaft, thereby to cool the burnt material, and in the process heat the air. The cooling air is then passed to the heat exchanger, to be further heated by heat exchange with the gaseous combustion/calcination reaction product, before being passed to the upper part of the shaft, to serve as combustion air for the combustion process.

A heater may be provided to provide auxiliary heating for the combustion air both at start-up, and if under particular conditions of operation the heating provided by heat exchange should not be sufficient to raise the combustion air to the desired temperature.

The air supplied to the upper part of the shaft is preferably introduced at a point in the shaft spaced from the shaft walls, so as to avoid so called "channelling", which tends to cause the gas flow to be down the walls of the shaft, and leads to uneven combustion and uneven calcination in the centre of the charge. The most desirable gas-flow profile is obtained with air introduced across the whole width of the shaft, more being introduced at the centre part than close to the walls.

Similarly, the gas outlets in the lower part of the shaft are preferably taken from points spaced from the walls of the shaft.

When solid fuel firing is required, the present apparatus includes means for charging a solid fuel, e.g. coal, with the solid material into the shaft. On the other hand if a gaseous or liquid fuel is to be used, appropriate combusting means are provided in the upper part of the shaft.

Typically these means comprise a plurality of hydrocarbon oil gasifying/burning units e.g. those described in British Patent Specification No 1282553, disposed immediately below the heated cooling air introducing means.

The present invention also provides a number of methods of utilising the present apparatus.

One provides a method of calcining a solid material, which method comprises supplying the material together with a solid fuel to the charge inlet of the apparatus, and combusting the fuel to calcine the material.

A second provides a method of calcining a solid material, which method comprises supplying the material to the charge inlet of the apparatus, and combusting a gaseous or liquid fuel in the upper part of the shaft to calcine the material.

A third provides a method of incinerating a waste material in solid form or coated onto a solid material, which method comprises supplying the material to the charge inlet of the apparatus, and combusting the waste material, optionally with a fuel.

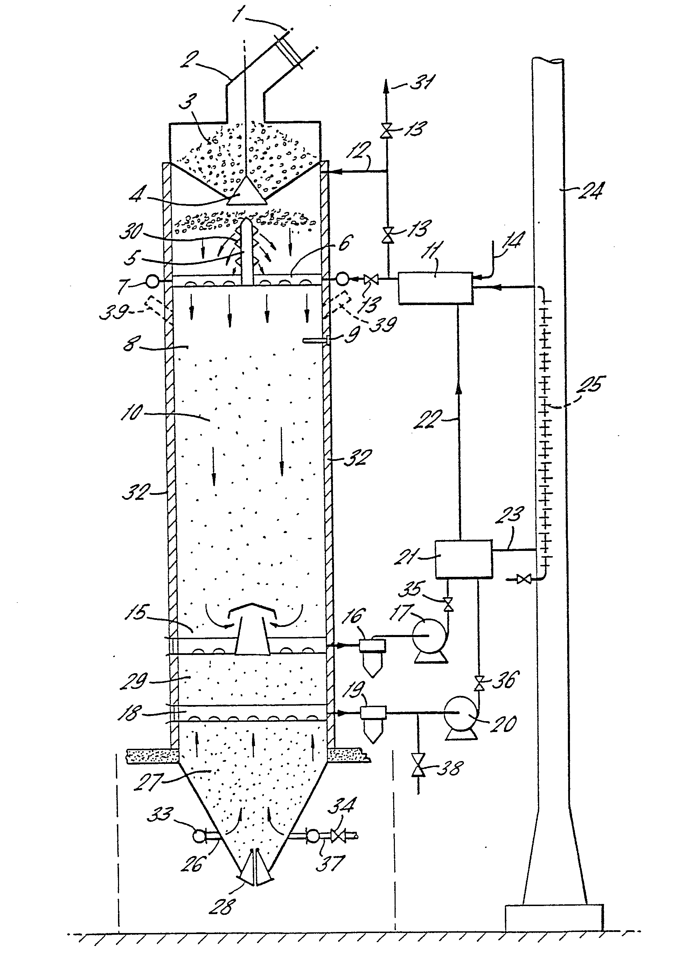

A preferred embodiment of the invention will now be described with reference to the accompanying drawing, which is a diagrammatic cross section of a kiln according to the invention.

The kiln comprises a vertical shaft having walls 32, and fed with a charge 3 including calcinable stone and a solid fuel (e.g. lignite, coal) via charging bell 4. An airtight charging door 1 in charging chute 2 ensures that air drawn downwardly through the kiln is substantially all heated air supplied by the various gas ducting arrangements described below.

The kiln includes a wall 5, supported at its ends in the walls of the kiln, and from its base by beams 6, for dividing the charge into two parts. Both wall 5 and beams 6 include ducts for supplying combustion air to the charge from a ring main 7. A temperature sensing device 9 is provided in the wall of the kiln to facilitate measurement of the temperature of calcination. A fan 17 draws the gaseous products of combustion and calcination through an inverted bell outlet 15, via ash and fines trap 16. The low pressure region thus created causes combustion air to flow downwardly through the charge through a preheat region 8 to the main calcination region 10, where calcination of the charge by burning of the fuel takes place. From fan 17, the gaseous products of the combustion/calcination reaction are passed to heat exchanger 21, and thus to chimney stack 24, via conduit 23.

Discharge doors 28 are opened periodically so that the whole of the charge moves progressively down the kiln as calcination takes place. The charge passes through an equilibration or "soaking" zone 29, before being cooled in region 27, the cooling being assisted by cooling air drawn through tuyeres 26 via outlets positioned across the length of a beam 18, and an ash and fines trap 19. Air is supplied to tuyeres 26 via a ring main 33 supplied via conduit 37 equipped with valve 34. Valve 34 is operated manually or atuomatically in conjunction with flow control valves 35 and 36 in order to obtain the desired balance of air flows through fans 17 and 20. The cooling air is drawn by fan 20, and is passed to heat exchanger 21, for heat exchange with the gaseous combustion/ calcination reaction products. Additional cooling air can be added, if required, via valve 38.

The thus heated cooling air is passed through conduit 22 to a standby heater 11, which can be brought into operation either on start-up of the kiln, or if necessary to effect rapid temperature changes of the combustion air to modify rapidly the combustion pattern in the kiln. A fuel supply 14, preferably for liquid or gaseous hydrocarbon fuel, is provided for introducing fuel to the heater 11.

A further conduit 25 is provided by which additional air may be introduced into the upper part of the kiln via heater 11. Conduit 25 is finned to improve heat exchange with hot flue gases in chimney stack 24. Heated air from heater 11 is passed to the upper part of the shaft by means of air inlets in beams 6, and inlets 30 in wall 5. Additionally, a conduit 12 is provided for passing heated air to the void space surrounding charging bell 4, to assist in drying and preheating the charge. Heated air may also be taken off through conduit 31 to preheat the charge before it is supplied to chute 2. Flow through these various conduits is controlled via valves 13.

The arrangement above described allows accurate control of combustion by facilitating control of the temperature of combustion air fed to the upper part of the shaft. Because of the down draught arrangement, the kiln can be made to run with substantially no production of smoke. Furthermore, the down draught arrangement enables the kiln to be shut down, without the need to discharge the entire contents of the kiln when it is desired to recommence calcination.

The kiln shown in the drawing may be operated in the same fashion as described above but fed with a charge of waste material, for example noxious industrial waste, either alone, or together with another solid fuel, and the kiln may be used with waste material as the sole or partial fuel either for the calcination of stone, or simply to incinerate the waste material. Liquid waste may be incinerated by coating onto solid particles, for example of pebbles, refractory material or even stone, which particles may be recycled after passage through the kiln.

The described kiln can readily be adapted for gaseous or liquid fuel firing by the incorporation of suitable burners immediately below the point in the shaft where the heated cooling air is introduced. In the drawing these burners are indicated in dotted outline and marked 39. By providing both these burners and a solid fuel charging system, a kiln of the present invention can readily be adapted to use a wide variety of different fuels.

## Claims

1. Combustion apparatus suitable for solid fuel firing, including a vertical shaft (32), an inlet (2) at the upper part of the shaft (32) for a charge of solid material (3), an outlet (28) at the bottom of the shaft (32) for burned material, and means for removing gaseous combustion products from the shaft (32), the apparatus including means (17) for drawing combustion air downwardly through the charge (3), means (20) for drawing cooling air through the burned material in the lower part of the shaft (32) to cool the burned material and thereby to heat the cooling air, and means (30) for introducing the heated cooling air substantially free from gaseous combustion products into the upper part of the shaft (32) to serve as combustion air for the combustion process, provided that no pre-heating of the charge (3) by the gaseous combustion products can occur, characterised in that means (15, 18) are provided to prevent mixing of the cooling air and the gaseous combustion products, and in that means (21) are provided for further heating the heated cooling air by heat exchange with the gaseous combustion products.

2. Apparatus as claimed in claim 1, including an outlet (18) for the cooling air in the lower part of the shaft (32), a fan (20) for passing the cooling air through a heat exchanger (21) and introducing it as heated combustion air into the upper part of the shaft (32), an outlet (15) for gaseous combustion products positioned above the cooling air outlet (18), and a fan (17) for drawing gaseous combustion products through the latter outlet (18), and passing them to the heat exchanger (21), thereby to cause a downward flow of combustion air through the charge (3).

3. Apparatus as claimed in claim 2, wherein an inlet (26) for cooling air is provided below the cooling air outlet (18), thereby to cause an upward flow of cooling air through the burned material.

4. Apparatus as claimed in claim 2 or claim 3, wherein the outlet (15) for gaseous combustion products is spaced from the walls of the shaft (32).

5. Apparatus as claimed in claim 4 wherein the said outlet (15) includes a plurality of outlet ports spaced from the walls of the shaft (32).

6. Apparatus as claimed in any one of claims 1 to 5, including a heater (11) for initial or supplementary heating of the air supplied to the upper part of the shaft (32).

7. Apparatus as claimed in any one of the preceding claims, wherein the means (30) for introducing heated combustion air into the shaft (32) is arranged to introduce the said air into a point in the shaft (32) spaced from the shaft walls.

8. Apparatus as claimed in claim 7, wherein the means (30) for introducing heated combustion air into the shaft (32) is arranged to introduce the said air into the shaft (32) at a plurality of points spaced from the shaft walls.

9. Apparatus as claimed in any one of the preceding claims, including means (1, 2, 4) for charging a solid fuel with the solid material into the shaft (32).

10. Apparatus as claimed in any one of claims 1 to 8, including means (39) for combusting a gaseous or liquid fuel in the upper part of the shaft (32).

11. Apparatus as claimed in claim 10, wherein the combustion means (39) comprises a plurality of hydrocarbon oil gasifying/burning units disposed immediatley below the heated cooling air introducing means (30).

12. A method of calcining a solid material, which method comprises supplying the material together with a solid fuel to the charge inlet of apparatus as claimed in any one of the preceding claims, and combusting the fuel to calcine the material.

13. A method of calcining a solid material, which method comprises supplying the material to the charge inlet of apparatus as claimed in any one of claims 1 to 11, and combusting a gaseous or liquid fuel in the upper part of the shaft to calcine the material.

14. A method of incinerating a waste material in solid form or coated onto a solid material, which method comprises supplying the material to the charge inlet of apparatus as claimed in any one of claims 1 to 11, and combusting the waste material, optionally with a fuel.

## Revendications

1. Installation de combustion appropriée pour le chauffage au moyen d'un combustible solide, qui comprend une cuve verticale (32), une entrée (2) située à la partie supérieure de la cuve (32) pour l'introduction d'une matière solide (3), une sortie (28) située au bas de la cuve (32) pour l'évacuation de la matière cuite ou brûlée, et des moyens pour évacuer les produits gazeux de la combustion de la cuve (32), l'installation comprenant des moyens (17) servant à aspirer l'air comburant de haut en bas à travers la charge (3), des moyens (20) servant à aspirer de l'air de refroidissement à travers la matière cuite ou brûlée contenue dans la partie inférieure de la cuve (32) pour refroidir la matière cuite ou brûlée et, de cette façon, chauffer l'air de refroidissement, et des moyens (30) destinés à introduire l'air de refroidissement chauffé sensiblement exempt de produites de combustion gazeux dans la partie supérieure de la cuve (32) pour servir d'air comburant pour le processus de combustion, en faisant en sorte qu'il ne puisse pas se produire de préchauffage de la charge (3) par les produits de combustion gazeux, caractérisée en ce qu'il est prévu des moyens (15, 18) pour empêcher le mélange de l'air de refroidissement et des produits de combustion gazeux, et en ce qu'il est prévu des moyens (21) pour chauffer davantage l'air de refroidssement chauffé par échange de chaleur avec les porduits de combustion gazeux.

2. Installation selon la revendication 1, comprenant une ouverture (18) pour l'air de refroidissement prévue dans la partie inférieure de la cuve (32), un ventilateur (20) servant à faire passer l'air de refroidissement à travers un échangeur de chaleur (21) et à l'introduire en qualité d'air comburant chauffé dans la partie supérieure de la cuve (32), une sortie (15) pour les produits de combustion gazeux positionnée au-dessus de la sortie d'air de refroidissement (18) et un ventilateur (17) servant à attirer les produits de combustion gazeux à travers la dernière sortie (18) et à les envoyer à l'échangeur de chaleur (21) pour déterminer de cette façon un écoulement descendant d'air comburant à travers la charge (3).

3. Installation selon la revendication 2, dans laquelle une entrée (26) pour l'introduction d'air de refroidissement est prévue sous la sortie d'air de refroidissement (18), pour déterminer de cette façon un écoulement ascendant d'air de refroidissement à travers la matière cuite ou brûlée.

4. Installation selon l'une des revendications 2 et 3, dans laquelle la sortie (15) prévue pour les produits de combustion gazeux est espacée des parois de la cuve (32).

5. Installation selon a revendication 4, dans laquelle ladite sortie (15) comprend une pluralité d'orifices de sortie espacés des parois de la cuve (32).

6. Installation selon l'une des revendications 1 à 5, comprenant un appareil de chauffage (11) servant à assurer un chauffage initial ou complémentaire de l'air fourni à la partie supérieure de la cuve (32).

7. Installation selon l'une quelconque des revendications précédentes, dans laquelle les moyens (30) servant à introduire l'air comburant chauffé dans la cuve (32) sont agencés pour introduire ledit air en un point de la cuve (32) qui est espacé des parois de la cuve.

8. Installation selon la revendication 7, dans laquelle les moyens (30) servant à introduire de l'air comburant chauffé dans la cuve (32) sont agencés pour introduire ledit air dans la cuve (32) en une pluralité de points espacés des parois de la cuve.

9. Installation selon l'une quelconque des revendications précédentes, comprenant des moyens (1, 2, 4) servant à charger un combustible solide avec la matière solide dans la cuve (32).

10. Installation selon l'une quelconque des revendications 1 à 8, comprenant des moyens (39) servant à brûler un combustible gazeux ou liquide dans la partie supérieure de la cuve (32).

11. Installation selon la revendication 10, dans laquelle les moyens de comubstion (39) comprennent une pluralité d'unités de gazéification/combustion d'huiles hydrocarbures disposées immédiatement au-dessous des moyens (30) d'introduction de l'air de refroidissement chauffé.

12. Procédé de calcination d'une matière solide, procédé qui consiste à acheminer la matière, avec un combustible solide, à l'entrée de charge d'une installation selon l'une quelconque des revendications précédentes, et à faire brûler le combustible pour calciner la matière.

13. Procédé de calcination d'une matière solide, procédé qui consiste à acheminer la matière à l'entrée de charge d'une installation selon l'une quelconque des revendications 1 à 11, et à faire brûler un combustible gazeux ou liquide dans la partie supérieure de la cuve pour calciner la matière.

14. Procédé d'incinération de matières de déchets sous forme solide ou déposée par enduction sur une matière solide, lequel procédé consiste à acheminer la matière à l'entrée de charge d'une installation selon l'une quelconque des revendications 1 à 11 et à faire brûler les matières de déchets, éventuellement avec un combustible.

## Patentansprüche

1. Zum Feuern von festem Brennstoff geeignete Brennvorrichtung, enthaltend einen vertikalen Schacht (32), einen Einlaß (2) an dem oberen Teil des Schachtes (32) für eine Charge von festem Material (3), einen Auslaß (28) am Boden des Schachtes (32) für gebranntes Material und Einrichtungen zum Entfernen der gasförmigen Verbrennungsprodukte aus dem Schacht (32), wobei die Vorrichtung Einrichtungen (17) zum Abziehen con Verbrennungsluft abwärts durch die Charge (3) aufweist, einrichtungen (20) zum Abziehen von Kühlluft durch das gebrannte Material in dem unteren Teil des Schachtes (32) zum Abkühlen des gebrannten Materials und daraus sich ergebendes Aufheizen der Kühlluft, sowie einrichtungen (30) zum Einleiten der von gasförmigen Verbrennungsprodukten weitgehend freien aufgeheizten Kühlluft in den oberen Teil des Schachtes (32), um als Verbrennungsluft für den Brennprozeß zu dienen, enthält, mit der Maßgabe, daß keine Vorerhitzung der Charge (3) durch die gasförmigen Verbrennungsprodukte stattfinden kann, dadurch gekennzeichnet, daß Einrichtungen (15, 18) vorgesehen sind, die das Vermischen von Kühlluft und gasförmigen Verbrennungsprodukten verhindern, und daß Einrichtungen (21) für die weitere Erhitzung der aufgeheizten Kühlluft durch Wärmeaustausch mit den gasförmigen Verbrennungsprodukten vorgesehen sind.

2. Vorrichtung nach Anspruch 1, enthaltend einen Auslaß (18) für die Kühlluft in dem unteren Teil des Schachtes (32), ein Gebläse (20) zum Befördern der Kühlluft durch einen Wärmetauscher (21) und Einleiten als aufgeheizte Verbrennungsluft in den oberen Teil des Schachtes (32), einen oberhalb des Kühlluftauslasses (18) angeordneten Auslaß (15) für gasförmige Verbrennungsprodukte und ein Gebläse (17) zum Abziehen von gasförmigen Verbrennungsprodukten durch den letzteren Auslaß (18) und Hinführen zu dem Wärmetauscher (21), was einen Abwärtsstrom der Verbrennungsluft durch die Charge (3) zur Folge hat.

3. Vorrichtung nach Anspruch 2, wobei ein Einlaß (28) für Kühlluft unterhalb des Kühlluftauslasses (18) vorgesehen ist, was eine Aufwärtsströmung der Kühlluft durch das gebrannte Material zur Folge hat.

4. Vorrichtung nach Anspruch 2 oder Anspruch 3, wobei der Auslaß (15) gasförmige Verbrennungsprodukte von den Wänden des Schachtes (32) in Abstand gehalten ist.

5. Vorrichtung nach Anspruch 4, wobei der Auslaß (15) eine Vielzahl von Auslaßöffnungen enthält, die von den Wänden des Schachtes (32) in Abstand gehalten sind.

6. Vorrichtung nach einem der Ansprüche 1 bis 5, enthaltend eine Heizvorrichtung (11) für die anfängliche oder ergänzende Erhitzung der dem oberen Teil des Schachtes (32) zugeführten Luft.

7. Vorrichtung nach einem der vorhergehenden Ansprüche, wobei die Einrichtung (30) zum Einleiten erhitzter Verbrennungsluft in den Schacht (32) so angeordnet ist, daß diese Luft an einem von den Schachtwänden in Abstand befindlichen Punkt in den Schacht (32) eingeleitet wird.

8. Vorrichtung anch Anspruch 7, wobei die Einrichtung (30) zum Einleiten von erhitzter Verbrennungsluft in den Schacht (32) so angeordnet ist, daß diese Luft in den Schacht (32) an einer Vielzahl von in Abstand von den Schachtwänden befindlichen Punkten eingeleitet wird.

9. Vorrichtung nach einem der vorhergehenden Ansprüche, enthaltend Einrichtungen (1, 2, 4) zum Einbringen eines festen Brennstoffes mit dem festen Material in den Schacht (32).

10. Vorrichtung nach einem der Ansprüche 1 bis 8, enthaltend eine Einrichtung (39) zum Verbrennen eines gasförmigen oder flüssigen Brennstoffes in dem oberen Teil des Schachtes (32).

11. Vorrichtung nach Anspruch 10, wobei die Verbrennungseinrichtung (39) eine Vielzahl von Kohlenwasserstofföl vergasenden/verbrennenden Einheiten enthält, die unmittelbar unterhalb der Einleitungseinrichtung (30) für erhitzte Kühlluft angeordnet sind.

12. Verfahren zum Brennen von festem Material, bestehend aus dem Zuführen des Materials zusammen mit einem festen Brennstoff zu dem Chargeneinlaß der Vorrichtung gemäß einem der vorhergehenden Ansprüche, und Verbrennen des Brennstoffes zum Brennen des Materials.

13. Verfahren zum Brennen von festem Material, bestehend aus dem Zuführen des Materials zu dem Chargeneinlaß der Vorrichtung gemäß einem der Ansprüche 1 bis 11, und Verbrennen eines gasförmigen oder flüssigen Brennstoffes in dem oberen Teil des Schachtes zum Brennen des Materials.

14. Verfahren zum Verbrennen von eine feste Form aufweisendem oder auf ein festes Material aufgebrachtem Abfallmaterial, bestehend aus dem Zuführen des Materials zu dem Chargeneinlaß der Vorrichtung nach einem der Ansprüche 1 bis 11 und Verbrennen des Abfallmaterials, wahlweise mit einem Brennstoff.

0 059 542